# EUROPEAN PATENT APPLICATION

(11) **EP 4 013 044 A1**
(43) Date of publication of application: **15.06.2022**
(21) Application number: 21206754.0
(22) Date of filing: 05.11.2021
(51) Int. Cl.: H04N 7/18

(54) **METHOD AND SYSTEM FOR AUTOMATICALLY DETERMINING AND TRACKING THE PERFORMANCE OF A VIDEO SURVEILLANCE SYSTEM OVER TIME**

(30) Priority: 08.12.2020 IN 202011053390
(71) Applicant: Honeywell International Inc., Charlotte, NC 28202 (US)
(72) Inventor: KONDAMARI, Raja Pratap, Charlotte, 28202 (US); DEVI, Shyamala, Charlotte, 28202 (US); KUMAR, Saravanan, Charlotte, 28202 (US)
(74) Representative: Haseltine Lake Kempner LLP

(57) **Abstract**

Performance of a video system including a plurality of video cameras each configured to provide a video stream to one or more video recorders and as a monitoring station at which a user can view live and recorded video streams is evaluated. A plurality of live video streams are automatically processed to ascertain one or more live video quality metrics. A plurality of recorded video streams are automatically processed to ascertain one or more recorded video quality metrics. One or more measures of performance of the video system are automatically determined based on the one or more live video quality metrics, the one or more recorded video quality metrics. One or more underperforming components of the video system are identified based at least in part on one or more of the measures of performance of the video system.

## Description

### Technical Field

The present disclosure relates generally to video systems, and more particularly to methods and systems for automatically tracking the performance of video systems over time.

### Background

Known video systems can include a large number of different pieces of equipment, including but not limited to video cameras, network devices, video recorders, servers and monitoring stations. Because of the large number of different pieces of equipment, and the complexity of many video surveillance systems, it can be difficult to ascertain and track the overall health of the video system over time. It would be desirable to provide improved ways of automatically ascertaining and tracking the health of a video surveillance over time.

### Summary

The present disclosure relates generally to video systems, and more particularly to systems and methods for automatically determining and tracking the performance of a video system over time. An example is a method of evaluating performance of a video system that includes a plurality of video cameras each configured to provide a video stream to one or more video recorders as well as a monitoring station at which a user can view live and recorded video streams. In this example, a plurality of live video streams are automatically processed to ascertain one or more live video quality metrics. A plurality of recorded video streams are automatically processed to ascertain one or more recorded video quality metrics. Video analytics results that are based on video analytics on a plurality of live video streams and/or recorded video streams are automatically processed to ascertain one or more video analytics quality metrics. One or more measures of performance of the video system are then automatically determined based on the one or more live video quality metrics, the one or more recorded video quality metrics and the one or more video analytics quality metrics. One or more underperforming components of the video system are identified based at least in part on one or more of the measures of performance of the video system. To maintain the performance of the video system, one or more of the underperforming components of the video system are replaced, upgraded and/or reconfigured.

Another example is a method of evaluating performance of a video system that includes a plurality of video cameras each configured to provide a video stream to one or more video recorders as well as a monitoring station at which a user can view live and recorded video streams. A plurality of live video streams are automatically processed to ascertain one or more live video quality metrics. A plurality of recorded video streams are automatically processed to ascertain one or more recorded video quality metrics. One or more measures of performance of the video system are automatically determined based on the one or more live video quality metrics and the one or more recorded video quality metrics. When present, one or more underperforming components of the video system are identified based at least in part on one or more of the measures of performance of the video system.

Another example includes a method of ascertaining adherence to video system performance specifications in a video system including a plurality of video cameras each configured to provide a video stream to one or more video recorders as well as a monitoring station at which a user can view live and recorded video streams. A plurality of live video streams are automatically processed to ascertain one or more live video quality metrics. A plurality of recorded video streams are automatically processed to ascertain one or more recorded video quality metrics. One or more measures of performance of the video system are automatically determined based at least in part on the one or more live video quality metrics and the one or more recorded video quality metrics. An adherence of the video system to the video system performance specification is automatically determined based at least in part on the one or more measures of performance of the video system. Information is outputted that pertains to the determined adherence of the video system with the video system performance specification.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative video system architecture;
Figure 2 is a flow diagram showing an illustrative method;
Figure 3 is a flow diagram showing an illustrative method;
Figure 4 is a flow diagram showing an illustrative method;
Figure 5 is a schematic block diagram showing an illustrative method;
Figure 6 is a schematic block diagram showing an illustrative method;
Figure 7 is a schematic block diagram showing an illustrative method; and
Figure 8 is a schematic block diagram of an example application.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

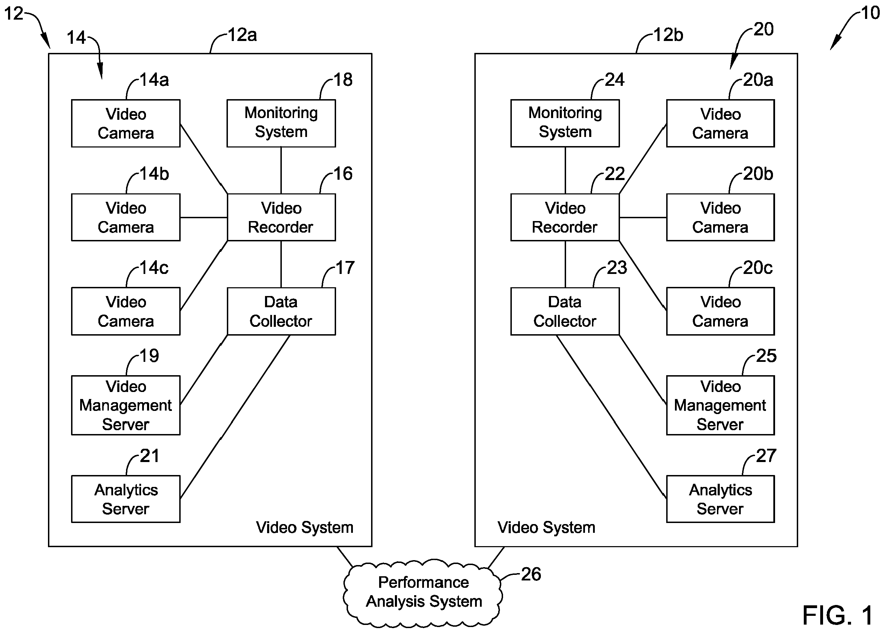

The present disclosure relates generally to video systems, such as video surveillance systems. Video systems may include a collection of, for example, network connected devices, networking equipment, remote monitoring stations, cloud servers, motion sensors, closed-circuit television (CCTV), security cameras, networked video recorders, panel controllers and the like. Figure 1 is a schematic block diagram of an illustrative video system architecture 10. The illustrative video system architecture 10 includes a number of video systems 12, with each video system 12 disposed at a different facility or a different geographic location, for example. As illustrated, the video system architecture 10 includes a video system 12a and a video system 12b. The video system 12a may be deployed within a first facility at a first geographic location (e.g. in Minnesota) while the video system 12b may be deployed within a second facility at a second geographic location (e.g. North Carolina) that is distinct from the first geographic location. In some cases, the video system 12a may be the video system for a first city while the video system 12b may be the video system for a second, different city.

In some instances, the video system 12a may be deployed within a first region of a facility such as a first floor of the facility while the video system 12b may be deployed within a second region of the facility such as the second floor of the facility. In another example, the video system 12a may be deployed in a first area such as a first parking lot of a facility and the video system 12b may be deployed in a second area such as a second parking lot of the facility. These are just examples. It will be appreciated that this is merely illustrative, as the video system architecture 10 may include any number of distinct video systems 12, including just only one distinct video system 12.

In the example shown, the video system 12a includes a number of video cameras 14 that are individually labeled as 14a, 14b, 14c. While a total of three video cameras 14 are shown, it will be appreciated that the video system 12a may include a much greater number of video cameras 14, or fewer video cameras 14. Depending on the size of the facility or location in which the video system 12a is deployed, the video system 12a may have hundreds or even thousands of video cameras 14. In some cases, the facility may be a city (e.g. smart city), with thousands of video cameras 14 distributed throughout the city. In the example shown, the video cameras 14 are in communication with a video recorder 16 and with a monitoring station 18 over a network or networks (e.g. a private network, a public network, and/or a combination of a private network and public network). The video recorder 16 may be configured to record video streams for subsequent playback. In some instances, the video recorder 16 may also provide archiving capabilities for saving video streams or clips of video streams for an extended period of time. In some cases, video streams or clips from some cameras are specified to be saved or archived for a longer period of time than video streams or clips from other cameras. If the size of the video streams or clips will exceed the capacity of the video recorder 16, the video recorder 16 may default to saving the most recent video streams or clips and discarding the older video streams or clips (e.g. FIFO or First In, First Out). This may cause some of the video streams or clips to not be saved or archived for the specified time period, which can be considered a reduction in performance of the video system. When this happens, the video recorder 16 may be considered an underperforming component, and may be replaced, upgraded and/or reconfiguring.

The monitoring station 18 may include one or more display panels upon which video streams or clips may be displayed for monitoring and/or analysis by a security guard or other operator. The monitoring station 18 may include resources (processing, memory) that receive and process a set of one or more video streams or clips and display the one or more video streams or clips on the display. The monitoring station 18 may also include one or more user input devices such as keyboard and mouse to receive input from the security guard or other operator. In some cases, video streams or clips are to be displayed at a certain frame rate and/or resolution. For example, video streams or clips from some cameras are to be displayed at a higher frame rate and/or resolution that video streams or clips from other cameras. Decoding video streams or clips with higher frame rates and/or resolutions typically required more resources of the monitoring station 18. If the resources of the monitoring station 18 are not sufficient to render the video streams or clips at their specified frame rate and/or resolution, the monitoring station 18 may default to a frame rate and/or resolution that is within the capability of the monitoring station, which can be considered a reduction in performance of the video system. When this happens, the monitoring station 18 may be considered an underperforming component, and may be replaced, upgraded and/or reconfiguring.

The video system 12a may include a data collector 17 that serves to collect relevant data from the other components of the video system 12a. The data collector 17 may, for example, be operably coupled with the video cameras 14, the video recorder 16 and/or the monitoring station 18. The video system 12a may include a video management server 19 and an analytics server 21. The video management server 19 may oversee operation of the video system 12a, The analytics server 21 may receive videos and corresponding meta data from the video cameras 14 and the video recorder 16, and may perform various analytics on the videos.

The connections between the video cameras 14, the video recorder 16, the data collector 17, the monitoring station 18, the video management server 19 and the analytics server 21 may be wired connections, such as via Ethernet connections. In some instances, the connections between the video cameras 14, the video recorder 16, the data collector 17, the monitoring station 18, the video management server 19 and the analytics server 21 may be wireless connections using one or more wireless communication protocols including, but not limited to, cellular communication, ZigBee, REDLINK^{™}, Bluetooth, WiFi, IrDA, dedicated short range communication (DSRC), EnOcean, and/or any other suitable common or proprietary wireless protocol, as desired. At least some of the video cameras 14 may communicate directly with the monitoring station 18. While a single video recorder 16 is shown, it will be appreciated that there may be any number of video recorders, depending on the size of the video system 12a and the number of video cameras 14.

In some cases, the connections between the video cameras 14, the video recorder 16, the data collector 17, the monitoring station 18, the video management server 19 and the analytics server 21 may be supported by networking devices such as routers, modems, repeaters, and/or other networking devices. In some cases, one or more of the networking devices may become a bottleneck that does not allow all of the video streams or clips of the video system 12a to be communicated to their desired destination at their specified frame rate and/or resolution. When this happens, the one or more of the networking devices may be considered an underperforming component, and may be replaced, upgraded and/or reconfiguring.

The illustrative video system 12b includes a number of video cameras 20 that are individually labeled as 20, 20b, 20c. While a total of three video cameras 20 are shown, it will be appreciated that the video system 12b may include a much greater number of video cameras 20. Depending on the size of the facility or location in which the video system 12b is deployed, the video system 12b may have hundreds or even thousands of video cameras 20. The video cameras 20 are in communication with a video recorder 22 and with a monitoring station 24. The video recorder 22 may be configured to record video streams for subsequent playback. In some instances, the video recorder 22 may also provide archiving capabilities for saving video streams or clips of video streams for an extended period of time. The monitoring station 24 may include one or more display panels upon which video streams may be displayed for monitoring and/or analysis by a security guard or other operator.

The video system 12b may include a data collector 23 that serves to collect relevant data from the other components of the video system 12b. The data collector 23 may, for example, be operably coupled with the video cameras 20, the video recorder 22 and/or the monitoring station 24. The video system 12b may include a video management server 25 and an analytics server 27. The video management server 25 may oversee operation of the video system 12b. The analytics server 27 may receive videos and corresponding meta data from the video cameras 20 and the video recorder 22, and may perform various analytics on the videos.

The connections between the video cameras 20, the video recorder 22, the data collector 23, the monitoring station 24, the video management server 25 and the analytics server 27 may be wired connections, such as via Ethernet connections. In some instances, the connections between the video cameras 20, the video recorder 22 and the monitoring station 24 may be wireless connections using one or more wireless communication protocols including, but not limited to, cellular communication, ZigBee, REDLINK^{™}, Bluetooth, WiFi, IrDA, dedicated short range communication (DSRC), EnOcean, and/or any other suitable common or proprietary wireless protocol, as desired. At least some of the video cameras 20 may communicate directly with the monitoring station 24. While a single video recorder 22 is shown, it will be appreciated that there may be any number of video recorders, depending on the size of the video system 12b and the number of video cameras 20. The illustrative video system 12b may be similar to the illustrative video system 12a, with perhaps a different number of video cameras 20a-20c, video recorders 22 and/or monitoring stations, and with perhaps different system requirements such as different archiving, frame rate and resolution requirements for the various video streams or clips in the video system 12b.

A performance analysis system 26 may be in communication with the video system 12a and the video system 12b. The performance analysis system 26 may, for example, be cloud-based and thus may reside on one or more servers that are remote from the video system 12a and the video system 12b. However, this is not required. The performance analysis system 26 may reside on a computer workstation that is remote from where the video system 12a and/or the video system 12b are deployed. In some instances, the performance analysis system 26 may reside on a computer workstation that is local to where the video system 12a and/or the video system 12b are deployed. It is contemplated that in some cases, the performance analysis system 26 may be deployed on the monitoring station 18 and/or the monitoring station 24. In some instances, the performance analysis system 26 or at least some functions thereof may reside within the video management servers 19 and 25 that form part of the video systems 12a and 12b. The performance analysis system 26 or at least some functions thereof may reside within the analytics servers 21 and 27 that form part of the video systems 12a and 12b. In some cases, the video system 12a has a separate and distinct performance analysis system from video system 12b.

The illustrative performance analysis system 26 may be configured to automatically process a plurality of live video streams (such as may be provided by the video cameras 14 and/or the video cameras 20) in order to ascertain one or more live video quality metrics. The performance analysis system 26 may be configured to automatically process a plurality of recorded video streams (such as may be provided by the video recorder 16 and/or the video recorder 22) to ascertain one or more recorded video quality metrics. The performance analysis system 26 may be configured to automatically process video analytics results that are based on video analytics that were performed on a plurality of live video streams and/or recorded video streams in order to ascertain one or more video analytics quality metrics. In some cases, the performance analysis system 26 may be configured to automatically determine one or more measures of performance of the video system 12a, 12b that are based on the one or more live video quality metrics, the one or more recorded video quality metrics and the one or more video analytics quality metrics. In some cases, the performance analysis system 26 may be configured to identify one or more underperforming components of the video system 12a, 12b based at least in part on one or more measures of performance of the video system 12a, 12b.

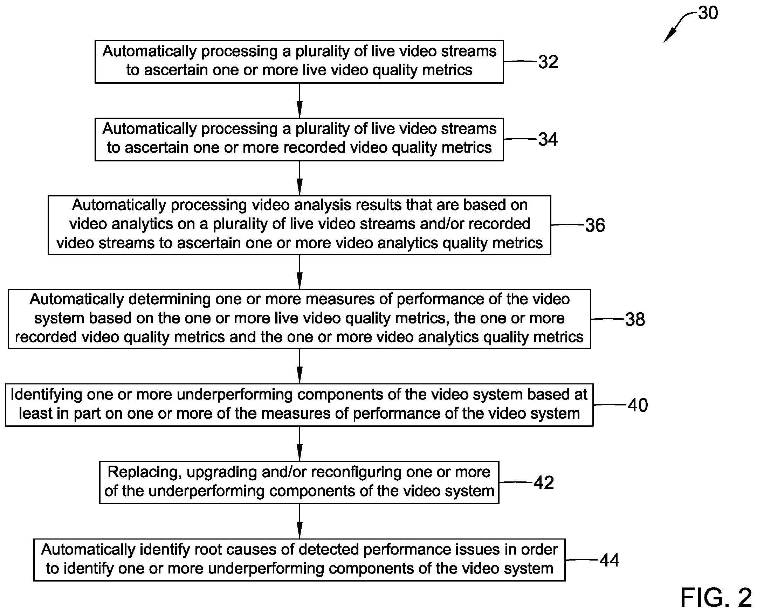

Figure 2 is a flow diagram showing an illustrative method 30 of evaluating the performance of a video system (such as the video system 12) that includes a plurality of video cameras (such as the video cameras 14, 20) that are each configured to provide a video stream to one or more video recorders (such as the video recorders 16, 22) and that includes a monitoring station (such as the monitoring stations 18, 24) at which a user can view live and recorded video streams. A plurality of live video streams are automatically processed to ascertain one or more live video quality metrics, as indicated at block 32. In some cases, each of the plurality of live video streams include associated meta data, and automatically processing the plurality of live video streams may include processing at least some of the associated meta data. As an example, the meta data may include a camera ID, a camera location, a frame rate and/or a resolution of the associated live video stream. Automatically processing the plurality of live video streams to ascertain one or more live video quality metrics may include confirming whether each corresponding live video stream is current on-line and available. Automatically processing the plurality of live video streams to ascertain one or more live video quality metrics may include determining whether each corresponding live video stream has an expected frame rate and/or an expected resolution. These are just examples.

A plurality of recorded video streams are automatically processed to ascertain one or more recorded video quality metrics, as indicated at block 34. In some cases, each of the plurality of recorded video streams may include associated meta data, and automatically processing the plurality of recorded video streams may include processing at least some of the associated meta data. Automatically processing the plurality of recorded video streams to ascertain one or more recorded video quality metrics may include confirming whether each corresponding recorded video stream is available, not corrupt, has been retained for a corresponding expected period of time, and/or has a desired frame rate and/or resolution. These are just examples.

Video analytics results that are based on video analytics on a plurality of live video streams and/or recorded video streams are automatically processed to ascertain one or more video analytics quality metrics, as indicated at block 36. The video analytics can process the video streams and automatically identify certain events in the video streams. For example, video analytics can be used, for example, to identify a person or object crossing a boundary (e.g. a fence), a person trespassing, a person or object tailgating through a security check point, a person or object traveling in a wrong direction, Illegal Parking, left out baggage detection, crowd detection, vehicle counting, speeding detection, missing object detection, traffic signal jump detection, License plate recognition, loitering detection, black listed person detection, face recognition, motion detection, camera blind detection, camera blur detection, camera field of view change detection, object classification, and triple ride detection. In some instances, automatically processing video analytics results may include processing logs of operator inputs that each indicate a false positive classification of a corresponding video analytics result.

One or more measures of performance of the video system based are automatically determined based on the one or more live video quality metrics, the one or more recorded video quality metrics and the one or more video analytics quality metrics, as indicated at block 38.

In some instances, one of the one or more measures of performance includes a Mean Time Between Failures (MTBF). The failure may be, for example, a particular one of the live video streams of the plurality of live video streams is not available when it should be available. The failure may be that a particular one of the live video streams of the plurality of live video streams is available but not rendered properly on an operator display screen. The failure may be that a particular one of the recorded video streams of the plurality of recorded video streams is not available when it should be available. The failure may be that a particular one of the recorded video streams of the plurality of recorded video streams is available but not rendered properly on an operator display screen. These are just examples. The one or more measures of performance may include a Mean Time Between Failures (MTBF), a Mean Time to Repair (MTR), a Mean Time Between Replacements (MTBR), a Mean Time to Failure (MTTF) and a Failure in Time. A false positivity rate and/or false negativity rate of the Video analytics may also correspond to a measure of performance of the video system. These are just examples.

One or more underperforming components of the video system are identified, based at least in part on one or more of the measures of performance of the video system, as indicated at block 40. In some cases, identifying one or more underperforming components of the video system may include comparing one or more of the measures of performance to one or more predetermined performance criteria. Once identified, one or more of the underperforming components of the video system may be replaced, upgraded and/or reconfigured, as indicated at block 42. In some cases, root causes of detected performance issues may be automatically identified in order to identify one or more underperforming components of the video system, as indicated at block 44. The root causes may be determined using data mining techniques such as frequent itemset mining, sequential pattern mining and/or any other suitable data mining technique using available data such as system logs and/or audit stores of the video system.

An example of using frequent itemset data mining to determine a root cause of a failure may be found in a video system that has more than one security camera connected to a video recorder. If the video recorder fails, video clips from all of the security cameras connected to the video recorder would begin to fail to record, all at about the same time. By identifying via frequent itemset data mining that the recordings of video clips from a plurality of security cameras began to fail all at about the same time, and by knowing the ontology of the video system, the failure of the particular video recorder may be determined to be the root cause of the failure. Another example may be found in a video system that has more than one security camera connected to a network switch. If the network switch fails, video clips from all of the security cameras connected to the network switch would begin to fail, all at about the same time. By identifying via frequent itemset data mining that the video clips and/or video streams from a plurality of security cameras began to fail to be delivered at about the same time, and knowing the ontology of the video system, the failure of the particular network switch may be determined to be the root cause of the failure. These are just examples.

An example of using sequential pattern mining to determine a root cause may be found in a video system that has more than one security camera connected to a video system network. In sequential pattern mining, it is a sequence of events that can be used to identify a root cause. For example, if a first security camera mis-behaves and begins producing a large amount of data thereby consuming a large amount of available bandwidth on the video system network, the remaining cameras that are connected to the video system network will have less available bandwidth. This may result in network chocking, which may cause the video clips and/or video streams from one or more of the other security cameras to begin to fail. By identifying the sequence of the first security camera beginning to produce a large amount of data, and then recognizing that the video clips and/or video streams from one or more of the other security cameras begin to fail to deliver across the video system network, the system may identify the first security camera as the root cause of the failure. This is just an example.

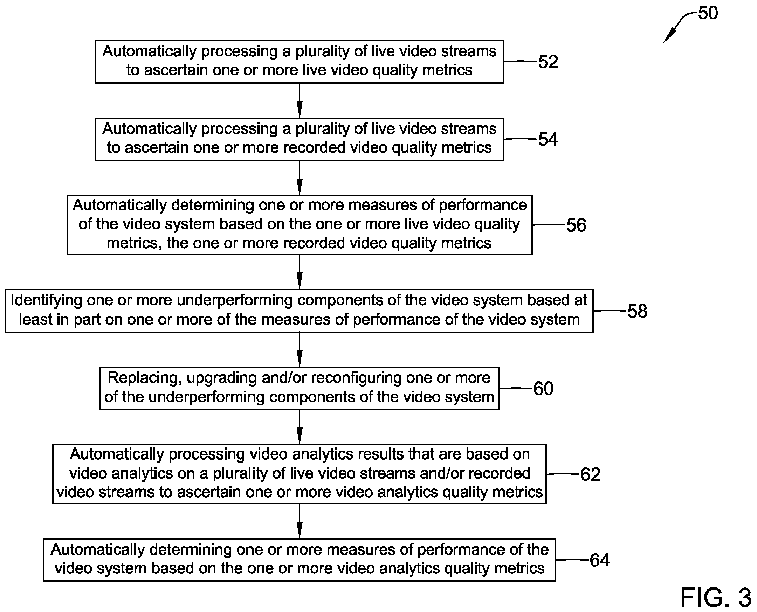

Figure 3 is a flow diagram showing an illustrative method 50 of evaluating the performance of a video system (such as the video system 12) that includes a plurality of video cameras (such as the video cameras 14, 20) that are each configured to provide a video stream to one or more video recorders (such as the video recorders 16, 22) and that includes a monitoring station (such as the monitoring stations 18, 24) at which a user can view live and recorded video streams. A plurality of live video streams are automatically processed to ascertain one or more live video quality metrics, as indicated at block 52. In some cases, each of the plurality of live video streams include associated meta data, and automatically processing the plurality of live video streams includes processing at least some of the meta data. A plurality of recorded video streams are automatically processed to ascertain one or more live video quality metrics, as indicated at block 54. In some cases, each of the plurality of recorded video streams include associated meta data, and automatically processing the plurality of recorded video streams include processing at least some of the associated meta data.

One or more measures of performance of the video system are automatically determined, based on the one or more live video quality metrics and/or the one or more recorded video quality metrics, as indicated at block 56. One or more underperforming components of the video system are identified based at least in part on one or more measures of performance of the video stream, as indicated at block 58.

In some cases, the method 50 further includes replacing, upgrading and/or reconfiguring one or more of the underperforming components of the video system, as indicated at block 60. The method 50 may further include automatically processing video analytics results that are based on video analytics on a plurality of live video streams and/or recorded video streams to ascertain one or more video analytics quality metrics, as indicated at block 62. In some instances, the method 50 may also include automatically determining one or more measures of performance of the video system based on the one or more video analytics quality metrics, as indicated at block 64.

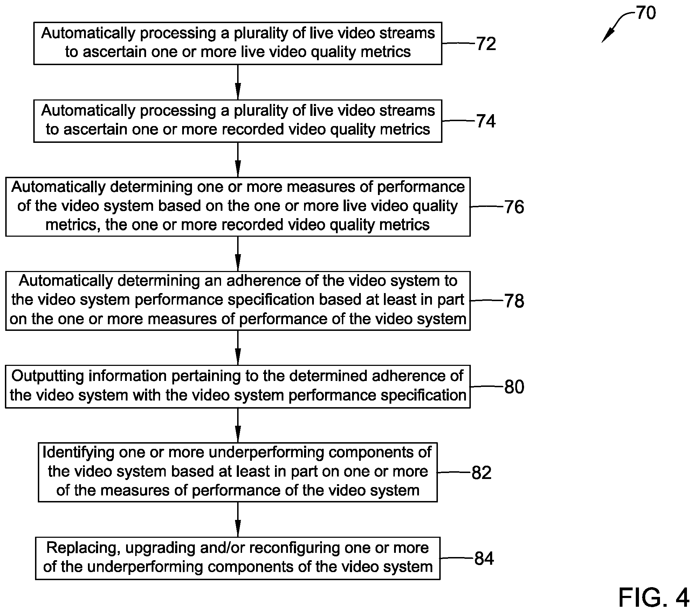

Figure 4 is a flow diagram showing an illustrative method 70 of ascertaining adherence to video system performance specifications in a video system (such as the video system 12) that includes a plurality of video cameras (such as the video cameras 14, 20) that are each configured to provide a video stream to one or more video recorders (such as the video recorders 16, 22) and that includes a monitoring station (such as the monitoring stations 18, 24) at which a user can view live and recorded video streams. A plurality of live video streams are automatically processed in order to ascertain one or more live video quality metrics, as indicated at block 72. A plurality of recorded video streams are automatically processed to ascertain one or more recorded video quality metrics, as indicated at block 74.

One or more measures of performance of the video stream are automatically determined based on the one or more live video quality metrics and the one or more recorded video quality metrics, as indicated at block 76. An adherence of the video system to the video system performance specifications is automatically determined based at least in part on the one or more measures of performance of the video system, as indicated at block 78. Information pertaining to the determined adherence of the video system with the video system performance specifications are outputted, as indicated at block 80.

In some cases, the method 70 may further include identifying one or more underperforming components of the video system based at least in part on one or more of the measures of performance of the video system, as indicated at block 82. In some cases, the method 70 may further include replacing, upgrading and/or reconfiguring one or more of the underperforming components of the video system, as indicated at block 84.

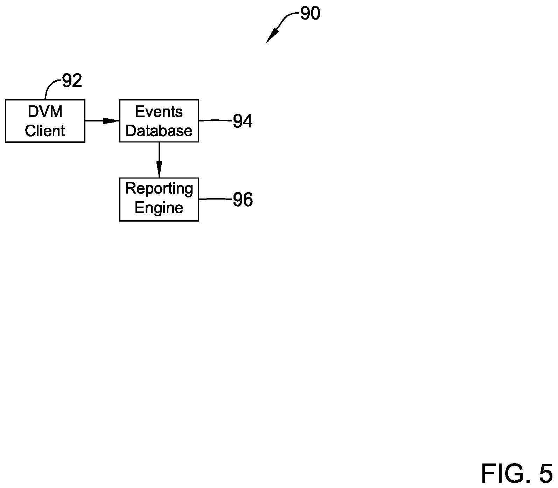

Figure 5 is a block diagram showing an illustrative method 90 of live video monitoring. Incidents detected by a DVM (digital video management) client 92 are fed to an events database 94. Workstations (such as the monitoring stations 18 and 24) audit the events database 94 to identify and store events. Various performance metrics may be calculated from the events stored in the events database 94. A reporting engine 96 may be configured to output appropriate information regarding video system performance.

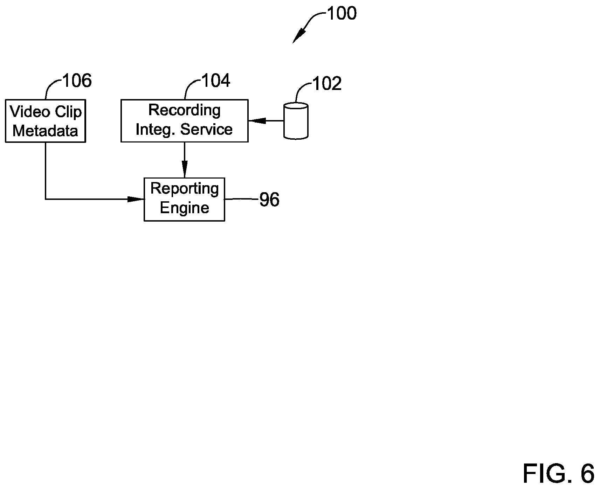

Figure 6 is a block diagram showing an illustrative method 100 of recorded video monitoring. Recorded videos are stored in a video repository 102 and are provided to a recording integrity service 104. The recording integrity service 104 determines if the actual recorded videos from the video repository 102 are in compliance with standards such as frame rate, resolution, recording time (start, end and elapse time) and no gaps within the video recordings (based on frame rate and elapsed time to verify that there aren't any missing frames). In some cases, the recording integrity service 104 may review meta data to ascertain whether the recorded video has been tampered with. Tampering includes rendering the video unplayable as well as deleting some or all of the video. Tampering includes removing or modifying individual frames of the recorded video. In some cases, the recording integrity service 104 may analyze an audit trail of the recorded video in order to ascertain instances of tampering. The recording integrity service 104 may analyze an access log of the recorded video in order to ascertain whether the recorded video was viewed or otherwise accessed by any individuals who are not authorized to view or otherwise access the recorded video. Inappropriate access to a recorded video (or a live video, for that matter) can be viewed as another form of tampering.

The recording integrity service 104 may also retrieve and playback at least portions of the recorded videos to ensure that archived recordings meet standards such as recording quality (e.g. frame rate and/or resolution). The recording integrity service 104 provides output to the recording engine 96. A video metadata service 106 provides relevant meta data such as camera number, start time, stop time, frame rate, resolution and/or others. In some cases, there may be automatically scheduled verification of recorded and archived videos for accessibility, available and quality by retrieving and analyzing video frames. This verification may occur manually as well. In some cases, verification may be randomly scheduled, and may be applied to randomly selected archived videos, for example.

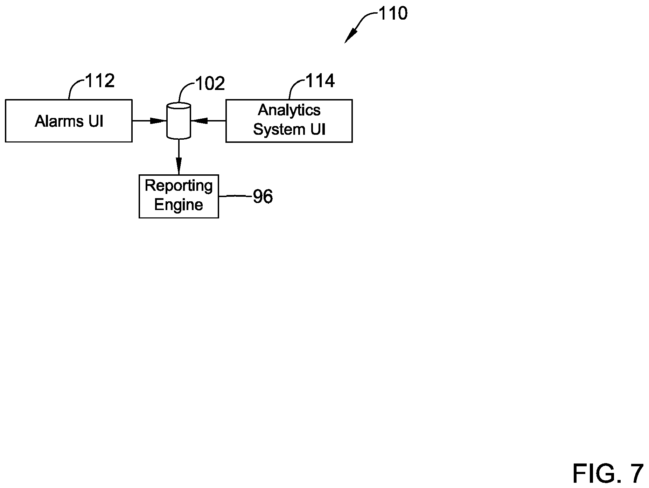

Figure 7 is a block diagram showing an illustrative method 110 of performing video analytics. Recorded videos are stored in the video repository 102. An alarms user interface 112 and an analytics system user interface 114 allows a user to indicate events as being false positives or true negatives, after being flagged by the video analytics.

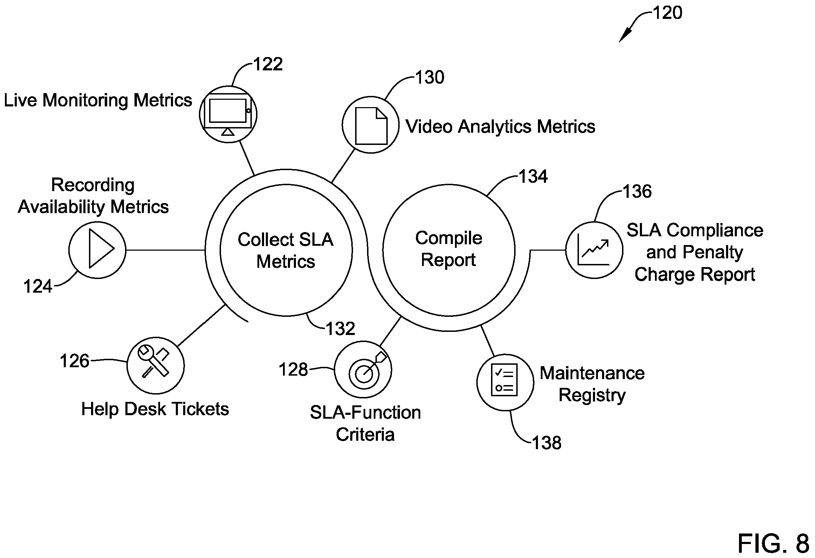

Figure 8 is a schematic block diagram of an example application 120 in which the performance analysis system 26 may be used to determine compliance with a Service Level Agreement (SLA). In some cases, a company or business may pay a variable fee for their ongoing video services, depending on how well the provided video services have met various performance criteria. For example, if a particular video system has a period of time in which an unusually high number of video cameras were out of operation for noticeable periods of time, this may be reflected in a lower invoice for services for that period of time. This is just an example.

The example application 120 includes Live Monitoring Metrics 122, which can include a variety of different metrics that pertain to live video performance. This may include whether particular video cameras are currently online, and whether the online video cameras are providing video of a desired resolution. Average duration for which live video is rendered at quality is an example. Time to restore live video (when lost) is another example. The amount of time that video is unavailable per day/month is another example. Recording Availability Metrics 124 can include a variety of different metrics that pertain to recorded video performance. This may include the average time between recording loss events as an example. The time to backfill recordings from edge camera is another example.

Help Desk Tickets 126 may include requests to remedy previously noted problems. SLA function criteria 128 may include expected response time per incident, which can vary depending on the type of incident. Some incidents may be easy to remedy, and thus would have a shorter expected response time per incident. The expected response time per type of request is an example. In some cases, these criteria may vary depending on subsystem. A Video Analytics Metrics 130 may include false positives which have been classified by operators and may include dismissed alarms. This can include false negatives, which are actual events that were not detected.

A Collect SLA Metrics block 132 may receive inputs from each of the Live Monitoring Metrics 122, the Recording Availability Metrics 124, the Help Desk Tickets 126, the SLA Function Criteria 128 and the Video Analytics Metrics 130. A Compile Report block 134 compiles relevant reports, including those that may be SLA-related, based on input from the Collect SLA Metrics block 132. The reports may also take into account inputs from an SLA Compliance block 136 and a Maintenance Registry block 138. The SLA Compliance block 36 may include compliance figures for live video, recorded video and analytics function. The Maintenance Registry block 138 may include information pertaining to power outages, network downtime and/or other failures that are the responsibility of the customer, and as such, failures detected as a result may be excluded when determining measures of performance of the video system. Likewise, the Maintenance Registry block 138 may include information pertaining to customer-requested maintenance of certain devices (e.g. cameras, routers, modems, servers, etc.), where such devices may be marked to be in a customer initiated maintenance mode and thus excluded when determining measures of performance of the video system.

It will be appreciated that devices may be placed into maintenance mode for a variety of reasons. A device may be placed into maintenance mode because it has reached the end of its expected lifespan, and is awaiting replacement. A device may be placed into maintenance mode because it is due for routine maintenance. Routine maintenance may occur on a regular schedule. In some instances, maintenance of a particular device may be indicated outside of the regular schedule when performance of the particular device indicates a need for maintenance. A device may be placed in maintenance mode when a third party such as a power utility or internet provider indicates that service to the device (such as electrical power or internet access) is scheduled to be down for a particular future period. A device may be placed in maintenance mode in response to an unscheduled and unexpected interruption delivery of one or more utilities to the device. A device may be placed in maintenance mode in response to a request that the device be turned off.

In some cases, SLA miss warnings may be proactively raised using predictive analytics-based system behavior. This may include, but is not limited to, looking at disk usage predictions, load on system due to usage, patterns from historical data and network failure patterns. In some instances, early warnings may be provided by means of alerts that are displayed on a display (such as of the monitoring stations 18 and 24) or are provided by email to appropriate individuals. Early warnings may be based at least in part upon predictive analytics for SLA performance misses.

In some cases, the telemetry provided from various video systems (such as the video systems 12a and 12b) may be aggregated in order to provide an aggregated look at SLA performance across a plurality of video systems 12. This can include data from individual surveillance equipment such as, but not limited to, cameras, video recorders and workstations. Aggregated data may provide a better picture for a system or vendor that is deployed at multiple geographic locations, as some video systems may be deployed at multiple locations that can be geographically diverse.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of evaluating performance of a video system that includes a plurality of video cameras each configured to provide a video stream to one or more video recorders, the video system including a monitoring station at which a user can view live and recorded video streams, the method comprising:
automatically processing a plurality of live video streams to ascertain one or more live video quality metrics;
automatically processing a plurality of recorded video streams to ascertain one or more recorded video quality metrics;
automatically processing video analytics results that are based on video analytics on a plurality of live video streams and/or recorded video streams to ascertain one or more video analytics quality metrics;
automatically determining one or more measures of performance of the video system based on the one or more live video quality metrics, the one or more recorded video quality metrics and the one or more video analytics quality metrics;
identifying one or more underperforming components of the video system based at least in part on one or more of the measures of performance of the video system; and
replacing, upgrading and/or reconfiguring one or more of the underperforming components of the video system.

2. The method of claim 1, wherein each of the plurality of live video streams includes associated meta data, wherein automatically processing the plurality of live video streams includes processing at least some of the associated meta data.

3. The method of any one of claims 1 or 2, wherein each of the plurality of recorded video streams includes associated meta data, wherein automatically processing the plurality of recorded video streams includes processing at least some of the associated meta data.

4. The method of any one of claims 1 to 3, wherein identifying one or more underperforming components of the video system comprises comparing one or more measures of performance to one or more predetermined performance criteria.

5. The method of any one of claims 1 to 4, wherein one of the one or more measures of performance comprises a Mean Time Between Failures (MTBF), wherein the failure is one of:
a particular one of the live video streams of the plurality of live video streams is not available when it should be available;
a particular one of the live video streams of the plurality of live video streams is available but not rendered properly on an operator display screen;
a particular one of the recorded video streams of the plurality of recorded video streams is not available when it should be available;
a particular one of the recorded video streams of the plurality of recorded video streams is available not rendered properly on an operator display screen.

6. The method of any one of claims 1 to 4, wherein the one of the one or more measures of performance comprises one or more of a Mean Time Between Failures (MTBF), a Mean Time to Repair (MTR), a Mean Time Between Replacements (MTBR), a Mean Time to Failure (MTTF) and a Failure in Time.

7. The method of any one of claims 1 to 6, wherein automatically processing the plurality of live video streams to ascertain one or more live video quality metrics comprises confirming whether each corresponding live video stream is currently available and/or determining whether each corresponding live video stream has an expected frame rate and/or resolution.

8. The method of any one of claims 1 to 7, wherein automatically processing the plurality of recorded video streams to ascertain one or more recorded video quality metrics comprises confirming whether each corresponding recorded video stream is retained for a corresponding expected length of time and/or processing logs of operator inputs each indicating a false positive classification of a corresponding video analytics result.

9. The method of any one of claims 1 to 8, further comprising automatically identifying root causes of detected performance issues in order to identify one or more underperforming components of the video system.

10. A method of evaluating performance of a video system that includes a plurality of video cameras each configured to provide a video stream to one or more video recorders, the video system including a monitoring station at which a user can view live and recorded video streams, the method comprising:
automatically processing a plurality of live video streams to ascertain one or more live video quality metrics;
automatically processing a plurality of recorded video streams to ascertain one or more recorded video quality metrics;
automatically determining one or more measures of performance of the video system based on the one or more live video quality metrics and the one or more recorded video quality metrics;
identifying one or more underperforming components of the video system based at least in part on one or more of the measures of performance of the video system.

11. The method of claim 10, further comprising:
automatically processing video analytics results that are based on video analytics on a plurality of live video streams and/or recorded video streams to ascertain one or more video analytics quality metrics; and
automatically determining one or more measures of performance of the video system based on the one or more video analytics quality metrics.

12. The method of any one of claims 10 or 11, wherein one of the one or more measures of performance comprises a Mean Time Between Failures (MTBF), wherein the failure is one of:
a particular one of the live video streams of the plurality of live video streams is not available when it should be available;
a particular one of the live video streams of the plurality of live video streams is available but not rendered properly on an operator display screen;
a particular one of the recorded video streams of the plurality of recorded video streams is not available when it should be available;
a particular one of the recorded video streams of the plurality of recorded video streams is available not rendered properly on an operator display screen.

13. The method of claim any one of claims 10 to 12, further comprising ascertaining whether one or more of the recorded video streams have been tampered with.

14. The method of any one of claims 10 to 13, wherein:
each of the plurality of live video streams includes associated meta data, wherein automatically processing the plurality of live video streams includes processing at least some of the associated meta data; and
each of the plurality of recorded video streams includes associated meta data, wherein automatically processing the plurality of recorded video streams includes processing at least some of the associated meta data.

15. A method of ascertaining adherence to video system performance specifications in a video system including a plurality of video cameras each configured to provide a video stream to one or more video recorders, the video system including a monitoring station at which a user can view live and recorded video streams, the method comprising:
automatically processing a plurality of live video streams to ascertain one or more live video quality metrics;
automatically processing a plurality of recorded video streams to ascertain one or more recorded video quality metrics;
automatically determining one or more measures of performance of the video system based on the one or more live video quality metrics and the one or more recorded video quality metrics;
automatically determining an adherence of the video system to the video system performance specification based at least in part on the one or more measures of performance of the video system; and
outputting information pertaining to the determined adherence of the video system with the video system performance specification.
